## Europäisches Patentamt

## European Patent Office

## Office européen des brevets

(19)

(11) Veröffentlichungsnummer: **0 260 427**

**A1**

(12) # EUROPÄISCHE PATENTANMELDUNG

(21) Anmeldenummer: **87111357.7**

(51) Int. Cl.⁴ **H01G 1/147**

(22) Anmeldetag: **05.08.87**

(30) Priorität: **18.08.86 DE 3627938**

(43) Veröffentlichungstag der Anmeldung:
**23.03.88 Patentblatt 88/12**

(84) Benannte Vertragsstaaten:
**AT BE CH DE ES FR GB IT LI**

(71) Anmelder: **Siemens Aktiengesellschaft Berlin und München**
**Wittelsbacherplatz 2**
**D-8000 München 2(DE)**

(72) Erfinder: **Moser, Thomas, Dipl.-Ing.**
**Schlesienstrasse 35**
**D-8563 Schnaittach(DE)**
Erfinder: **Otto, Klaus, Dipl.-Chem.**
**Klingenfeldstrasse 54**
**D-8500 Nürnberg(DE)**
Erfinder: **Kippenberg, Horst, Dr.**
**Sudetenring 24**
**D-8522 Herzogenaurach(DE)**
Erfinder: **Ramler, Johann, Dr.**
**Hauptplatz 14**
**A-8530 Deutschlandsberg(AT)**
Erfinder: **Unterlass, Josef, Dipl.-Ing.**
**Leonhardstrasse 100a**
**A-8010 Graz(AT)**

(54) **Füllschichtbauteil und Verfahren zu dessen Herstellung.**

(57) Füllschichtbauteil und Verfahren zu dessen Herstellung Die Erfindung bezieht sich auf ein Füllschichtbauteil aus monolithischer Keramik, insbesondere Kondensator, mit einem keramischen Schichtaufbau aus dichten und porösen Schichten, der mit einem metallischen Werkstoff getränkt und auf den Außenflächen mit Kontaktierungen versehen ist. Gemäß der Erfindung weisen die Kontaktierungen (10, 20, 30) zumindest an ihren Oberflächen Anreicherungen (12, 22, 32) mit Bestandteilen auf, die mit dem Material der Kontaktierungen (10, 20, 30) eine oder mehrere intermetallische Verbindungen, welche im Tränkwerkstoff weitgehend unlöslich sind, bilden. Diese Anreicherungen (12, 22, 32) können bei einem ersten Herstellungsverfahren vor dem Tränkprozeß, in einem anderen Herstellungsverfahren auch während des Tränkprozesses aufgebracht werden.

FIG 1

## Füllschichtbauteil und Verfahren zu dessen Herstellung

Die Erfindung bezieht sich auf ein Füllschichtbauteil aus monolithischer Keramik, insbesondere Kondensator, gemäß dem Oberbegriff des Patentanspruches 1. Daneben bezieht sich die Erfindung auch auf Verfahren zur Herstellung eines solchen Füllschichtbauteiles gemäß dem Oberbegriff der Patentansprüche 6 oder 11.

Zur Herstellung eines Füllschichtbauteiles und speziell eines Füllschichtkondensators wird üblicherweise von einem gesinterten Keramikgrundkörper ausgegangen, der aus dichten und porösen Bereichen - z.B. abwechselnden Schichten - aufgebaut ist und dessen poröse Bereiche in einem besonderen Verfahrensschritt mit einem flüssigen Metall bzw. einer Metallegierung getränkt werden. Die hierfür benötigten keramischen Körper können z.B. entsprechend der DE-PS 24 62 007 hergestellt werden.

Im Interesse einer niedrigen Verfahrenstemperatur werden als Tränkwerkstoff niedrig - schmelzende Metalle bevorzugt, wie z.B. Blei oder auch Blei-Legierungen. Aufgrund der in der Regel ungünstigen Benetzungsspannungen zwischen Keramik und Tränkwerkstoff einerseits und aufgrund der meist geringen Höhenabmessungen der zu tränkenden porösen Bereiche (z.B. 2 bis 10 µm) andererseits muß beim Tränkprozeß Überdruck angewendet werden, weswegen man in diesem Fall von sogenanntem Drucktränken spricht. Derartige Fertigungsverfahren sind vom Stand der Technik bekannt.

Zur Verwendung des Füllschichtbauteiles insbesondere als Kondensator werden an den Durchtrittsstellen des Tränkmetalles auf dem Keramikkörper Kontaktierungen aus einem geeigneten, metallischen Werkstoff aufgebracht. In der Regel werden dafür Silberbasiswerkstoffe ausgewählt. Werden diese Kontaktierungen vor dem Tränkprozeß auf der Keramikoberfläche aufgebrannt, wobei gleichermaßen durchgängige Porösitäten vorgesehen werden müssen, so verhindern sie ein Wiederaustreten des flüssigen Tränkwerkstoffes aus den porösen Bereichen des Keramikkörpers beim Herausnehmen aus dem Tränkbad. Der Grund dafür ist die Neigung herkömmlicher Tränkwerkstoffe zu teilweiser Legierungsbildung mit dem Silberbasiswerkstoff der Kontaktierungen bzw. zumindest die gute Benetzung zwischen beiden Werkstoffen. Eine Legierungsbildung nach vorheriger Lösungsreaktion ist aber erwünscht, um einen einwandfreien elektrischen Übergang, d.h. die sogenannte Anbindung, zwischen der metallischen Füllung der porösen Bereiche und der Kontaktierungen zu gewährleisten.

Mit der Lösungsreaktion ist aber zugleich der Nachteil verbunden, daß die Kontaktierungen während des Drucktränkvorganges unzulässig stark vom Tränkbad angelöst und im ungünstigen Fall auch nahezu abgelöst werden können.

In der GB-A-21 04 291 wird eine aluminiumhaltige Glasfritte vor dem Tränken auf den Keramikkörper für das Füllschichtbauteil aufgebrannt. Eine solche Schicht ist zwar gegenüber dem Tränkbad resistent; sie ist jedoch nicht lötbar, so daß in nachfolgenden Arbeitsschritten zusätzlich lötfähige Schichten auf die erste Schicht aufgebracht werden müssen.

Weiterhin wird in der EP-A-0 092912 vorgeschlagen, auf den Keramikkörper aus Silber bzw. einer Silberlegierung und einer Glasfritte eine Außenterminierung aufzubringen, die zunächst eingebrannt und anschließend durch Wärmebehandlung bei 350 bis 400 °C mit Schwefel-bzw. Schwefelwasserstoffdampf mit Silbersulfid überzogen wird., Dadurch soll das Ablösen der Silberschicht vom Keramikkörper vermieden werden.

Auch bei letzterem Verfahren müssen also zusätzliche Arbeitsschritte durchgeführt werden, wobei außerdem mit hochgiftigen Stoffen gearbeitet wird. Dabei entsteht bei der Herstellung der Terminierungen nascierender Wasserstoff, der keramische Werkstoffe reduziert und somit eine Verschlechterung der dielektrischen Eigenschaften des Keramikkörpers bewirken kann.

Aufgabe der Erfindung ist es daher, einen Aufbau und eine Zusammensetzung der Kontaktierungen zu schaffen, daß sowohl eine gute elektrische Anbindung zu der metallischen Füllung garantiert wird, als auch zugleich eine Ablösebeständigkeit gegenüber dem Tränkbad, insbesondere einem Blei-oder Blei-Legierungs-Bad, erreicht wird.

Die Aufgabe ist erfindungsgemäß durch die kennzeichnenden Merkmale des Patentanspruches 1 gelöst. Vorteilhafte Weiterbildungen sind in den Unteransprüchen, die zugehörigen Herstellungstechniken in den Verfahrensansprüchen angegeben.

Bei der Erfindung sind die Kontaktierungen zwar vorteilhafterweise auf Silber-Basis realisiert; sie können aber auch durch Gold-oder Kupfer-Schichten gebildet werden, wobei insbesondere Kupfer zusammen mit Silber geeignet sein kann. Die Kontaktierungen weisen dabei an ihren freien Flächen, d.h. an den Außenseiten, Anreicherungen mit Bestandteilen aus entsprechenden Legierungen auf. Vorzugsweise kann die Anreicherung als Deckschicht ausgebildet sein. Dabei können die Anreicherungen speziell intermetallische Silber-Indium-Verbindungen, die beispielsweise die stöchiometrischen Zusammensetzungen AgIn$_2$, Ag$_2$In oder Ag$_3$In haben, sein. Statt Indium oder in Kombination mit Indium kann auch Gallium als Bestandteil für die Anreicherungen verwendet werden.

In einem ersten, auf das erfindungsgemäße Füllschichtbauteil abgestellten Herstellungsverfahren werden die Kontaktierungen mit den Anreicherungen vor dem Tränkprozeß auf den keramischen Schichtaufbau aufgebracht. Alternativ dazu können die Anreicherungen aber auch in einem zweiten Herstellungsverfahren während des Tränkprozesses aufgebracht werden. Als Tränkwerkstoff werden im letzteren Fall insbesondere Blei-Indium-Legierungen verwendet, wobei der Tränkwerkstoff auch Silber und weitere metallische Zusätze enthalten kann.

Weitere Einzelheiten und Vorteile der Erfindung ergeben sich aus der nachfolgenden Figurenbeschreibung von Ausführungsbeispielen anhand der Zeichnung.

Es zeigen

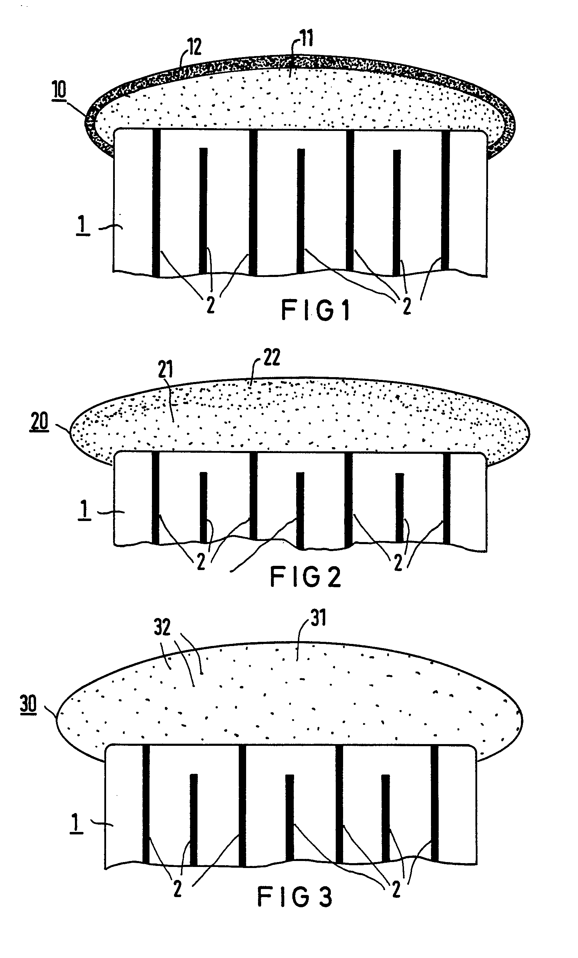

FIG 1 bis FIG 3 Füllschichtbauteile, bei denen die Kontaktierungen in unterschiedlicher Weise aufgebaut sind.

In den Figuren sind identische Teile mit gleichen Bezugszeichen versehen. Die Figuren werden nachfolgend teilweise zusammen beschrieben.

In FIG 1 bis FIG 3 ist jeweils ein Ausschnitt aus einem Bauteil 1 dargestellt, das einen Schichtaufbau aus abwechselnd dichten und porösen Schichten 2 aufweist. Werden die porösen Schichten mit Metallen gefüllt und die Seitenflächen des Bauteiles 1 mit metallischen Schichten als Kontaktierungen versehen, so lassen sich aufgrund der dielektrischen Eigenschaften der Keramik Kondensatoren realisieren. Dazu müssen die porösen Schichten 2 in geeigneter Weise mit einem Werkstoff gefüllt werden. Letzteres erfolgt in bekannter Weise durch Druck-oder Schleudertränken, wofür beispielsweise Bleiwerkstoffe verwendet werden.

In FIG 1 ist auf das Bauteil 1 eine Kontaktierung 10 als Außenelektrode aufgebracht. Die Kontaktierung 10 besteht aus einer Kappe 11 aus porösem Silber, welches durch Legierungsbildung fest mit Blei als Tränkwerkstoff für die Füllung der porösen Schichten 2 anbindbar ist. Auf den Silberkappen 11 ist außen eine poröse Deckschicht 12 aus intermetallischen Silber-Indium-Verbindungen aufgebracht, die insbesondere die stöchiometrischen Zusammensetzungen AgIn$_2$, Ag$_2$In oder Ag$_3$In haben.

Die Kontaktierungen 10 werden vor dem eigentlichen Tränkprozeß aufgebracht, was durch zweimalige Beschichtung der Keramikkörper 1 erfolgt. In einem ersten Beschichtungsvorgang wird die Silberkappe 11 hergestellt und in einem zweiten Beschichtungsvorgang die zugehörige Deckschicht aus den Silber-Indium-Verbindungen. Das Herstellen solcher Schichten kann in einfacher Weise durch Eintauchen in ein flüssiges Silberbad oder entsprechende Metalltinkturen erfolgen. Insbesondere hat sich eine Tinktur auf Silberbasis mit 2 bis 15 Gew.-% Indium als geeignet erwiesen. Dazu kann auch ein Galliumzusatz vorhanden sein, der bis 20 % gehen kann. Die so erzeugten Außenelektroden 10 haben Mikroporositäten, so daß die Bauteile 1 mit den Kontaktierungen 10 einem Drucktränkprozeß unterzogen werden können.

Erfolgt nun das Drucktränken mit beispielsweise einer Bleilegierung, so ist die Kontaktierung 10 durch die Ag-In-Grenzschicht 12 gegen ein Anlösen weitgehend geschützt. Andererseits erfolgt beim Drucktränken und gleichzeitiger oder anschließender Wärmebehandlung eine Legierungsbildung zwischen dem die Keramik benetzenden Tränkwerkstoff und der Silberkappe 11 der Kontaktierung 10. Damit ist eine hinreichende elektrische Anbindung von der Kontaktierung 10 an die Innenelektroden mit Bleifüllung 2 erreicht.

In FIG 2 ist auf das Bauteil 1 eine Kontaktierung 20 als reine, poröse Silberkappe aufgebracht. Diese Bauteile werden einem Drucktränkprozeß unterzogen, wobei dem flüssigen Tränkwerkstoff, insbesondere der Bleibasisschmelze, Indium zugesetzt ist. Nach Art einer Filtrierung reagiert das Indium insbesondere im Außenbereich 22 der Kontaktierung 20 mit dem Silber und bildet dort intermetallische Phasen gemäß Beispiel 1, während in dem Bauteil 1 zugewandten Bereich 21 der Kontaktierung 20 weitgehend reines Silber verbleibt. Im Gegensatz zum Ausführungsbeispiel nach FIG 1 sind aber die Bereiche nicht eindeutig als separate Schichten getrennt.

In FIG 3 ist ein Bauteil 1 mit einer Kontaktierung 30 als Kappe aus weitgehend homogenen Material versehen. Das Material besteht hier aus intermetallischen Silber-Indium-Verbindungen in einem Silberüberschuß. Dafür wird in herkömmlicher Weise eine handelsübliche Silber-Indium-Paste verwendet, die mit einem Silberzusatz versetzt ist. Das Beschichten erfolgt z.B. durch Tauchen und anschließendes Einbrennen. Es ergibt sich so in der Kontaktierung 30 eine Silbermatrix 31 mit einer statistischen Verteilung von feinen Silber-Indium-Partikeln 32.

Anstelle des Aufbringens der Kontaktierungen mittels Metallisierungs-Pasten kann auch eine Beschichtung durch Aufdampfverfahren, beispielsweise durch Sputtern, durchgeführt werden.

Bei den beschriebenen Ausführungsbeispielen ist durch die Anreicherungen an Silber-Indium-Bestandteilen jeweils dafür Sorge getragen, daß bei dem eigentlichen Tränkprozeß eine hinreichende Ablösebeständigkeit der Kontaktierungen gewährleistet ist, daß aber gleichzeitig beim Tränken bzw. durch Wärmebehandlung nach dem Tränken durch die Legierungsbildung des Tränkwerkstoffes mit dem Material der Kontaktierungen eine elektrische Anbindung erreicht wird.

Gleichgute Ergebnisse werden erhalten, wenn die Kontaktierungen statt aus Silber aus einem anderen Metall der ersten Nebengruppe des Periodensystems bestehen und wenn statt Indium andere Elemente der dritten Nebengruppe des Periodensystems verwendet werden. Es kommt hier entscheidend auf die Bildung der intermetallischen Phasen an, die insbesondere gegen Blei als Tränkwerkstoff weitgehend resistent sein müssen, aber im Material der Kontaktierungen löslich sind.

**Ansprüche**

1. Füllschichtbauteil aus monolithischer Keramik, insbesondere Kondensator, aufgebaut aus dichten und porösen Schichten, die in einem Tränkprozeß mit Metall bzw. einer Legierung infiltriert werden und mit Kontaktierungen auf den Außenflächen versehen sind, **dadurch gekennzeichnet,** daß die Kontaktierungen (10, 20, 30) zumindest an ihren freien Oberflächen Anreicherungen (12, 22, 32) mit Bestandteilen enthalten, die mit dem Hauptbestandteil der Kontaktierungen (10, 20, 30) wenigstens eine intermetallische Verbindung, welche im Tränkwerkstoff weitgehend unlöslich ist, bilden.

2. Füllschichtbauteil nach Anspruch 1, **dadurch gekennzeichnet,** daß die Anreicherungen eine Deckschicht (12) auf den Kontaktierungen (10) bilden.

3. Füllschichtbauteil nach Anspruch 1, **dadurch gekennzeichnet,** daß die Kontaktierungen (10, 20, 30) wenigstens ein Element der ersten Nebengruppe des Periodensystems (Cu, Ag, Au) umfassen.

4. Füllschichtbauteil nach Anspruch 1, **dadurch gekennzeichnet,** daß die Bestandteile der Anreicherungen wenigstens ein Element der dritten Nebengruppe (Ga, In, Tl) des Periodensystems umfassen.

5. Füllschichtbauteil nach Anspruch 3, wobei die Kontaktierungen im wesentlichen aus Silber bestehen und die Anreicherungen Indium als Bestandteile enthalten, **dadurch gekennzeichnet,** daß als intermetallische Silber-Indium-Verbindung mindestens eine der Verbindungen mit der stöchiometrischen Zusammensetzung $AgIn_2$, $Ag_2In$ oder $Ag_3In$ vorhanden ist.

6. Verfahren zur Herstellung eines Füllschichtbauteiles nach Anspruch 1 oder einem der Ansprüche 2 bis 5 durch Tränken eines mit porösen Kontaktierungen versehenen Keramikkörpers aus dichten und porösen Schichten mit einem flüssigen metallischen Werkstoff, **dadurch gekennzeichnet,** daß die Kontaktierungen (10, 30) mit den Anreicherungen (12, 32) vor dem Tränkprozeß auf den Keramikkörper (1) aufgebracht werden.

7. Verfahren nach Anspruch 6, **dadurch gekennzeichnet,** daß die Kontaktierungen (10, 30) durch wenigstens einmaliges Beschichten des Keramikkörpers (1) hergestellt werden.

8. Verfahren nach Anspruch 6 und 7, **dadurch gekennzeichnet,** daß die Kontaktierungen (10) durch zweimaliges aufeinanderfolgendes Beschichten des Keramikkörpers (1) hergestellt werden.

9. Verfahren nach Anspruch 7 oder 8, **dadurch gekennzeichnet,** daß zumindest für den zweiten Beschichtungsvorgang eine Tinktur mit Metallbestandteilen auf Silberbasis mit Zusätzen bis zu 20 m-% von Indium und/oder Gallium, Rest Silber, verwendet wird.

10. Verfahren nach Anspruch 6 bis 9, **dadurch gekennzeichnet,** daß für einen einmaligen Beschichtungsvorgang die Tinktur mit Silber vermischt wird.

11. Verfahren zur Herstellung eines Füllschichtbauteiles nach Anspruch 1 oder einem der Ansprüche 2 bis 5 durch Tränken eines mit porösen Kontaktierungen versehenen keramischen Schichtaufbaus aus dichten und porösen Schichten mit einem flüssigen metallischen Werkstoff, **dadurch gekennzeichnet,** daß die Bestandteile der Anreicherungen (22) während des Tränkprozesses in die Kontaktierungen 20) eingebracht werden.

12. Verfahren nach Anspruch 11, **dadurch gekennzeichnet,** daß als Tränkwerkstoff eine Blei-Indium-Legierung mit einem Indiumanteil zwischen 2 und 20 m-%, vorzugsweise 5 m-% ist.

13. Verfahren nach Anspruch 12, wobei die Kontaktierungen im wesentlichen aus Silber bestehen, **dadurch gekennzeichnet,** daß als Tränkwerkstoff eine Blei-Indium-Legierung eingesetzt wird, die zusätzlich Silber enthält und daß Silber und Indium mindestens zum Teil als intermetallische Verbindung vorliegen.

14. Verfahren zur Herstellung eines Füllschichtbauteiles nach Anspruch 13, **dadurch gekennzeichnet,** daß der Silber-Gehalt des Tränkwerkstoffes bis 20 m-% beträgt.

15. Verfahren nach den Ansprüchen 12 bis 14, **dadurch gekennzeichnet,** daß das Indium teilweise durch Gallium ersetzt ist.

16. Verfahren nach einem der Ansprüche 12 bis 14, **dadurch gekennzeichnet,** daß das Indium ganz oder teilweise durch Zinn ersetzt ist.

FIG 1

FIG 2

FIG 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | EP-A-0 092 912 (STANDARD TELEPHONES AND CABLES LTD CO.) <br> * Seite 2, Zeile 27 - Seite 6, Zeile 15 * <br><br> ----- | 1-3,6 | H 01 G 1/147 |

RECHERCHIERTE
SACHGEBIETE (Int. Cl.4)

H 01 G
H 05 K

Der vorliegende Recherchenbericht wurde für alle Patentansprüche erstellt

| Recherchenort | Abschlußdatum der Recherche | Prüfer |
|---|---|---|
| DEN HAAG | 26-11-1987 | SCHUERMANS N.F.G. |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus andern Gründen angeführtes Dokument
...............................................................................
& : Mitglied der gleichen Patentfamilie, übereinstimmendes
Dokument

EPO FORM 1503 03.82 (P0403)